Europäisches Patentamt

European Patent Office

Office européen des brevets

(11) Publication number: **0 244 691**
**A1**

## (12) EUROPEAN PATENT APPLICATION

(21) Application number: **87105814.5**

(22) Date of filing: **21.04.87**

(51) Int. Cl.⁴: **B60T 7/04** , G05G 5/18

(30) Priority: **08.05.86 US 861044**

(43) Date of publication of application:
**11.11.87 Bulletin 87/46**

(84) Designated Contracting States:
**DE FR GB**

(71) Applicant: **ITT INDUSTRIES INC.**
**320 Park Avenue**
**New York, NY 10022(US)**

(72) Inventor: **Burgei, Russell Jerome**
**1500 West North Street**
**Jackson Michigan 49202(US)**

(74) Representative: **Grau, Ulf**
**c/o ALFRED TEVES GMBH Guerickestrasse7**
**D-6000 Frankfurt (M) 90(DE)**

(54) **Cable tensioning device.**

㊄ A cable tensioning device (10) is disclosed including a foot operated lever arm (22) to which a cable is fastened and having a pawl (20) pivotably mounted thereto for engagement and disengagement with a stationary sector gear (18). The pawl is mounted for linear displacement relative to the axis of compression of a stationary compression spring (62) acting on the pawl in response to movement of the lever arm for biasing the pawl into engagement with the sector gear as the lever arm pivots from the released position to the engaged position and for biasing the pawl out of engagement with the sector gear upon momentary application of an additional force on the lever arm when in the engaged position.

FIG. 2

## CABLE TENSIONING DEVICE

### Background Of The Invention:

This invention relates to a mechanism for tensioning a flexible cable. More particularly, although not limited thereto, the invention relates to a device particularly adapted for tensioning, holding and releasing the brake cable in an automotive vehicle.

Heretofore, cable tensioning devices for vehicle brakes have typically employed a sector type gear engaged in ratcheting fashion by a pawl or other gear like member mounted on a foot operated lever arm. The pawl progressively engages the sector gear as the lever arm is rotated so as to pull and tension a cable attached to one end of the lever arm. Release of the tension is achieved by way of a separate manually operated lever which physically pulls or forces the pawl or gear out of engagement with sector gear.

While such arrangements are effective, they suffer certain shortcomings including excessive noise and "flyback" of the lever arm when the pawl is physically pulled out of engagement from the sector gear. This is so due to the rapid release of the tension in the cable and the rather high forces between the pawl and sector gear as the release lever disengages the pawl from the sector gear. Additionally the release lever and associated parts add to the complexity and cost of the device and also the operator must use at least one hand to operate the release lever.

### Summary Of The Invention:

It would therefore be highly desirable to provide for a more cost effective cable tensioning device that eliminates the excessive noise and "flyback" associated with present devices and which provides for hands free operation in both application and release of cable tension.

According to the invention, there is provided a cable tension, holding, and release device that is for automotive vehicle application operated solely by the operator's foot.

An important aspect of the invention provides for a novel pivotable pawl member mounted to a foot operated lever arm so that the axis of rotation of the pawl is linearly displaceable relative to the axis of compression of a compression spring for biasing the pawl toward a sector gear as the pawl moves from a released position to an actuated position with the lever arm and conversely for biasing the pawl away from the gear in the actuated position of the lever arm.

An important feature of the invention provides for the sector and pawl to include complementary self-locking teeth for holding the pawl, lever arm and thus the cable tensioned in the actuated position. Upon application of a further force on the lever arm by the operator's foot with the device in the locked or actuated, the self-locking teeth spread apart and the spring bias rotates the pawl in a direction whereby the pawl moves out of engagement from and clears the sector.

A still further important feature provides for the pawl to be mounted to the lever arm by way of a pin received in aligned elongated slots in the lever arm providing for linear displacement of the pawl and axis of rotation thereof over the length of the slots.

According to a still further important feature, the compression spring is stationarily mounted to a mounting member and the slots are configured so that the axis of rotation of the pawl is alternatively positioned on opposite sides of the axis of compression of the spring in the released and actuated positions respectively so as to change the direction of rotation of the pawl in the released and actuated positions.

According to a still further important aspect of the invention, the pivot pin in the slots is provided with an actuating stem portion that contacts a stationary stop in the release position of the lever arm to set the axis of rotation of the pawl relative to the axis of compression of the compression spring.

### Brief Description Of The Drawing:

The invention will be better understood after a reading of the following Detailed Description of the Preferred Embodiment in conjunction with the accompanying drawing in which:

Figure 1 is an exploded isometric view of a preferred embodiment of the invention showing details of construction;

Figure 2 is a diagrammatic representation showing details of the operation of the device of Figure 1; and,

Figure 3 is cross sectional view taken along the line 3-3 of Figure 2 showing further details of construction.

Detailed Description Of The Preferred Embodiment"

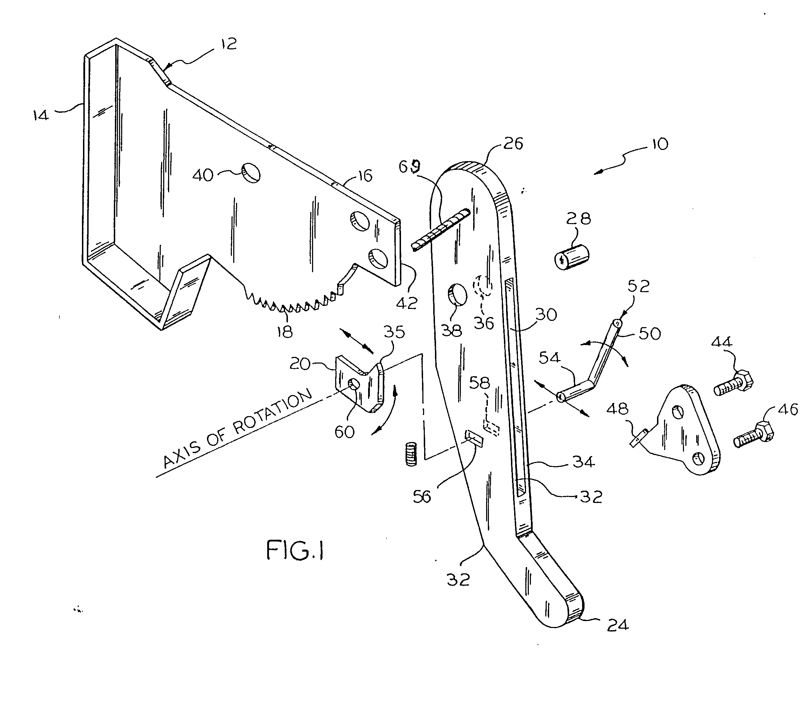

Shown in Figure 1, in exploded isometric view, is a cable tensioning device 10. The tensioning device shown and the description thereof to follow is of a type for use as an automotive vehicle parking brake actuator. It is to be understood, however, that the invention is not to be considered limited to an automotive parking brake, but rather, is applicable to other applications where cable tensioning is required.

The tensioning device 10 includes a mounting member 12 that is provided with an appropriate mounting flange 14 or other well known means for affixing the member 12 to a stationary structural member such as the body, frame or splashboard of a vehicle not shown. The mounting member is further provided with a planar plate portion 16 that includes a sector gear-like toothed portion 18 which cooperates with a locking pawl 20 as set out below.

An elongated lever arm 22 in the form of an arm for activation at one end 24 by an operator's foot is pivotably attached proximate a second end 26 thereof to the mounting member 12 with a pin 28. As shown in Figure 1, the lever arm 22 includes an elongated slot-like clearance opening 30 along a substantial portion of its length defining a pair of parallel side wall 32, 34. The planar portion 16 of the mounting member 12 is disposed in the clearance slot 30 in the lever arm 22 between the side walls 32, 34 and the pin 28 extends through a pair of aligned clearance holes 36, 38 in the walls 32, 34 and a clearance hole 40 in the mounting member. When mounted, the sector gear portion 18 is positioned generally centrally within the clearance slot 30 and a free end 42 of the mounting member is positioned externally of the lever arm on the side thereof opposite the location of the mounting flange portion of the mounting member.

Affixed to the free end 42 of the mounting member by way of a pair of fasteners 44, 46 is a stop member 48 which co-operates with an actuating stem portion 50 on a pivot pin member 52.

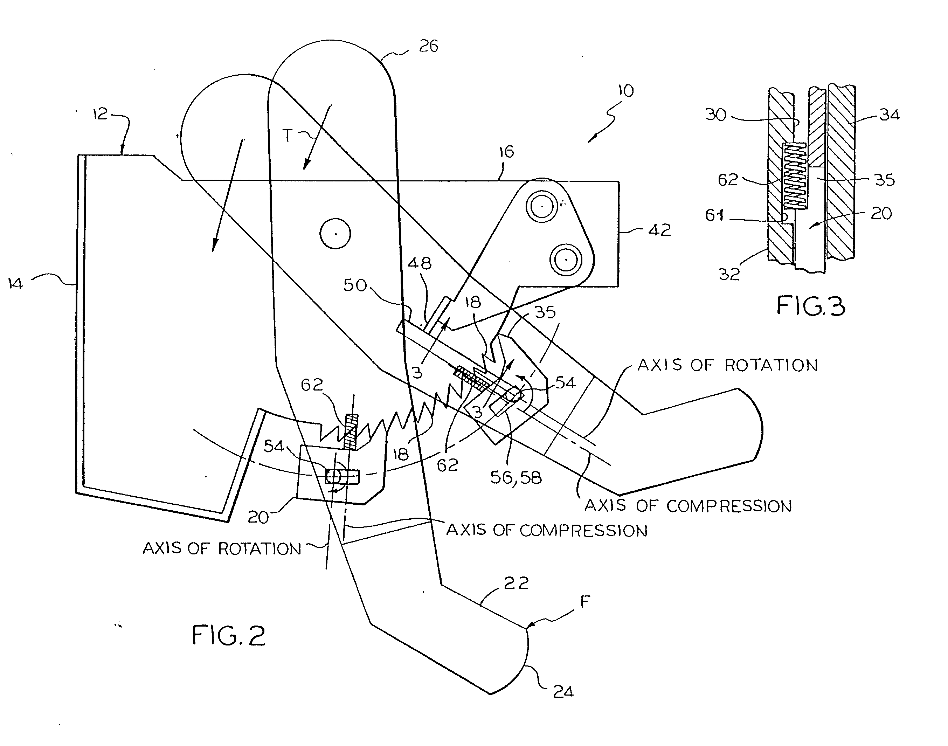

The locking pawl 20 is also disposed in the clearance slot 30 of the lever arm between the side walls 32, 34 and is pivotably retained by a pin portion 54 of the pivot pin member 52. The pin portion 54 extends through aligned, elongated slots 56, 58 in the side walls 32, 34 and is rotatably journaled in a clearance hole 60 in the pawl. The pivot member 52 is retained in position by any well known retention means such as for example a circlip, cotter pin, snap ring, etc. It can be seen that the pawl is reversibly pivotable about an axis of rotation defined by the pivot pin portion 54. Also the pivot pin portion 54, and consequently the pawl and axis of rotation, is simultaneously linearly displaceable over the length of the slots 56, 58 as indicated in Figures 1 and 2.

As shown in Figure 1, the pawl 20 is provided with a tooth like projection 35 complementary in shape with the tooth form of the sector gear 18. The form of the sector gear teeth and projection are preferrably of a self-locking design for holding the pawl in engagement to the sector gear in the engaged or cable tensioned position as described below.

Referring to Figure 3, there is provided in the one wall 32 of the lever arm a semicircular spring cavity 61 into which a circular compression spring 62 is positioned. A portion of the spring protrudes laterally into clearance slot 30 in the lever arm and is supported at its one end on the top of the pawl 20. The cavity 60 is located in the side wall 32 relative to the ends of the slots 56, 58 so as to position the axis of compression of the spring 62 constant relative to the lever arm and on opposite sides of the axis of rotation of the pawl when the pivot portion 54 is at the respective opposite ends of the slots. It can therefore be appreciated that the compression spring 62 will bias the pawl 20 to rotate in the clockwise direction, as viewed in the direction according to Figure 2, when the pawl pivot pin is positioned at the left most end of the slot, as viewed in Figure 2, because the axis of compression is positioned offset to the right of the axis of rotation. Conversely, the pawl will be biased to pivot counter-clockwise, in Figure 2, when the pivot portion 54 is at the right end of the slots, as viewed in Figure 2. This is so because the axis of compression of the spring 62 is then positioned to the left of the axis of rotation of the pawl.

Mode Of Operation

Referring to Figure 2, the mode of operation of the device will now be described. A cable 69, represented in Fig. 2 by the arrow T at the end 26 of the lever arm, to be tensioned is affixed at the end of the lever arm opposite the actuated end and is relaxed when the lever arm is in the released position, the up position as shown in Figure 2. In the release position, the actuating stem 50 of the pivot member 52 is contacted against the stop 48 which causes the pivot pin portion 54 to be moved against the right-most end of the slots 56, 58 as viewed in Figure 2. The axis of compression of the spring 62 is thereby offset from the axis of rotation so as to bias the pawl counter-clockwise and the tooth 35 of the pawl toward the sector gear. As the lever arm 22 is pivoted from the released position to the actuated or cable tensioned position, the lower position in Figure 2, the pawl tooth 35 moves over the sector gear teeth 18 in a ratcheting fashion. Then the cable tension T desired is achieved, the self locking thread form retains the pawl tooth in the sector gear thereby locking the lever arm in the actuated position. It can be seen from Figure 2 that as the lever am moves toward the actuated position the pivot pin is progressively repositioned to the opposite end of the slots 56, 58, the left end as viewed in Figure 2, which shifts the axis of rotation to the left of the axis of compression of the spring 62, as viewed in Figure 2, placing a clockwise bias force on the pawl. As noted, the self locking thread form and friction forces present hold the pawl engaged in the sector gear against the weaker spring bias force.

To release the cable tension, the operator reapplies a force F on the lever arm with his foot in the direction of actuation sufficient to separate the self locking threads, whereby the bias force of the compression spring pivots the pawl and tooth clockwise out of engagement from the sector gear.

The operator may then release this force on the lever arm allowing the cable tension T to reposition the lever arm and pawl to the release position. The actuating stem 52 recontacts the stop 48 resetting the position of the axis of rotation relative to the axis of compression and again imposing a counter-clockwise turning moment on the pawl toward the sector gear.

It should be noted that the invention allows the operator to apply and release in a controlled manner the cable tension without the use of his hand, but rather solely with his foot. The invention also eliminates the noise and "flyback" associated with present cable tensioners in that the operator's foot and leg function as a shock absorber.

Having described the invention, those skilled in the art having the benefit of the description and drawings can rapidly devise other embodiments and modifications and those other embodiments and modifications are therefore to be considered to be within the scope of the appended claims.

## Claims

1. A cable tensioning device, **characterised** by a mounting member (12);
a lever arm (22) pivotably mounted to said mounting member (12) for movement between a cable tensioned position and a cable relaxed position, said lever arm (22) including means for attaching said cable (69) to said lever arm (22) for movement therewith;
releasable lock means for locking said lever arm (22) in said cable tensioned position; and means responsive to a force acting on said lever arm (22) when locked in said cable tensioned position in a direction toward said cable tensioned position for releasing said releasable lock means from locking said lever arm (22).

2. A device according to claim 1, **characterised** in that said releasable lock means is a pawl (20) mounted to said lever arm (22) for pivotal movement about an axis including a gear-tooth like projection (35) for engaging complementary shaped teeth (18) on said mounting member (12), and bias means applied to said pawl (20) at a location relative to said axis of rotation providing for pivotable movement of said pawl (20) in a first direction for engaging said projection (35) in said teeth (18) during movement of said lever arm (22) from said cable released position to said cable tensioned position.

3. The device according to claim 2, **characterised** in that said means responsive to said force for releasing said pawl (20) includes said teeth (18) and said projection (35) being of a self locking form, and means for changing the location at which said bias is applied to said pawl (20) relative to said axis of rotation in the cable tensioned position providing for pivotal movement of said pawl (20) in a second direction for disengaging said projection (35) from said teeth (18) upon movement of said lever arm (22) under the influence of said force thereon.

4. The device according to claim 3, **characterised** in that said bias means is a compression spring (62) having an axis of compression lying at a constant position relative to said mounting member (12); said lever arm (22) includes a slot (56, 58);
said pawl (20) which is mounted to said lever arm (22) with a pin and which is extending transversely through said slot (56, 58), said pin being rotatably journaled in a hole (60) in said pawl (20) defining said axis of rotation and being linearly slidably disposed in said slot (56, 58) for movement over the length of said slot, thereby providing for linear displacement of said axis of rotation relative to said axis of compression of said spring (62).

5. The device according to claim 4, **characterised** in that the location and length of said slot (56, 58) relative to the axis of compression of the spring (62) is configured to place the axis of rotation of said pawl (20) on opposite sides of the axis of compression in the cable relaxed and cable tensioned positions respectively.

6. A cable tensioning device, **characterised** by a mounting member (12) including a plurality of gear-like teeth (18);
a lever arm (22) pivotably mounted at a location proximate one end (26) to said mounting member (12) for movement between an actuated position and a released position, said lever arm (22) including means for attaching an end of said cable (69) to be tensioned to said lever arm (22) for movement therewith;

said lever arm (22) further including elongated slot means (56, 58);

a pawl member (20) including at least one gear-tooth like projection (35) complementary to said gear-like teeth (18), and an aperture (60);

a pivot pin (52) including a pivot portion (54) extending through said slot means (56, 58) and pivotably journaled in said aperture (60) in said pawl (20), said pawl (20) thereby being pivotably mounted to said lever arm (22) by way of said pivot portion (54) of said pivot pin (52), said pivot pin (52) and said pawl (20) being linearly displaceable over the length of said slot means (56, 58), said pivot pin (52) further including an elongated stem-like actuating arm portion (50) extending from said pivot portion (54);

stop means (48) affixed on said mounting member (12) contacting said actuating arm portion (50) of said pivot pin (52) in the released position of said lever arm (22) for positioning said pivot portion (54) of said pivot pin (52) against a first end of said slot means (56, 58) in said lever arm (22) in the released position, said pivot portion (54) of said pivot pin (52) positioned against a second end of said slot means (56, 58) in the actuated position of said lever arm (22); and,

means (62) biasing said pawl member (20) about said pivot portion (54) of said pivot pin (52) during movement of said lever arm (22) from said released position toward said actuated position in a first direction providing for engagement of said projection (35) on said pawl (20) with said teeth (18) on said mounting member (12), said means (62) biasing said pawl member (20) adapted to bias said pawl (20) about said pivot portion (54) in the actuated position of said lever arm (22) in second direction opposite said first direction providing for disengagement of said projection (35) from said teeth (18).

7. The device according to claim 6, **characterised** in that said teeth (18) and said projection (35) have a configuration defining a self-locking form, whereby said projection (35) is retained in said teeth (18) in the actuated position against the bias of said bias means (62) acting on said pawl (20).

8. The device according to claim 6, **characterised** in that said pivot pin (52) is a generally L-shaped rod having a first leg defining said pivot portion (54) received in said slot means (56, 58) and in said aperture (60) in said pawl (20) and a generally elongated second leg defining said actuating arm portion (50).

9. The device according to claim 8, **characterised** in that said lever arm (22) includes a longitudinal slot-like elongated clearance opening (30) defining a pair of parallel side walls (32, 34), said side walls provided with a pair of aligned slots (56, 58), one slot in each of said side walls, said mounting member (12) affixed to said lever arm (22) in said slot-like clearance opening (30) between said side walls (32, 34), said pawl (20) disposed in said slot-like clearance opening (30) between said side walls (32, 34) in coplanar relationship with said mounting member (12), said aperture (60) in said pawl (20) aligned with said slots (56, 58) in said side walls (32, 34), and

said pivot portion (54) of said pivot pin (52) extending through each said slot in said side walls (32, 34) and said aperture (60) in said pawl (20).

10. The device according to claim 9, **characterised** in that said means biasing said pawl (20) is a compression spring (62) between said mounting member (12) and said pawl (20) affixed to said mounting member (12) at a location relative to said pair of slots (56, 58) therein defining an axis of compression of said spring (62) lying offset from an axis of rotation of said pawl (20) about said pivot portion (54) of said pivot pin (52) toward the second end of said pair of slots (56, 58) in the released position of said lever arm (22) providing for said bias of said pawl (20) in said first direction in the released position, and also lying offset from said axis of rotation of said pawl (20) about said pivot portion (54) of said pivot pin (52) toward the first end of said pair of slots (56, 580 in the actuated position of said lever arm (22) providing for said bias of said pawl (20) in said second direction in the actuated position.

11. A cable tensioning device, **characterised** by a mounting member (12); a lever arm (22) mounted to said mounting member (12) for pivotable movement between a released position and an actuated position, said lever arm including means for mounting said cable (69) thereto, said cable (69) being tensioned in the actuated position;

means associated with said mounting member (120 and said lever arm (22) for locking said lever arm (22) in said actuated position upon application of a first force on said lever arm (22) in a direction and of a magnitude for moving said lever arm (22) to said actuated position; and

means associated with said lever arm (22) and with said means for locking for the purpose of releasing said means for locking from locking said lever arm (22), said means for releasing being operative upon application of a second force on said lever arm in said direction for moving said lever arm (22) to said actuated position of a magnitude greater than that of said first force.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 511 107 (KATUJI YASIRO) * Column 4, line 60 - column 5, line 69; figures 1-14 * | 1 | B 60 T 7/04 G 05 G 5/18 |
| A | | 2,3,4 | |
| X | FR-A-2 138 472 (GROSGURIN) * Page 1, lines 10-36; figures 1-3 * | 1,2,3 | |
| A | | 4,5 | |
| A | US-A-3 273 418 (ELLIS) | | |

TECHNICAL FIELDS SEARCHED (Int. Cl.4)

B 60 T 7/00
G 05 G 1/00
G 05 G 5/00
F 16 C 1/00

The present search report has been drawn up for all claims

| Place of search | Date of completion of the search | Examiner |
|---|---|---|
| THE HAGUE | 27-07-1987 | HARTEVELD C.D.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82